(19) Europäisches Patentamt
European Patent Office
Office européen des brevets

(11) **EP 4 289 793 A1**

(12) **EUROPEAN PATENT APPLICATION**
published in accordance with Art. 153(4) EPC

(43) Date of publication:
**13.12.2023 Bulletin 2023/50**

(21) Application number: **22767530.3**

(22) Date of filing: **10.03.2022**

(51) International Patent Classification (IPC):
***C01G 53/00*** *(2006.01)*    ***B01J 8/24*** *(2006.01)*

(52) Cooperative Patent Classification (CPC):
**B01J 8/24; C01G 53/00;** Y02E 60/10; Y02W 30/84

(86) International application number:
**PCT/KR2022/003358**

(87) International publication number:
**WO 2022/191634 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.03.2021 KR 20210031909**

(71) Applicant: **SK Innovation Co., Ltd.**
**Seoul 03188 (KR)**

(72) Inventors:
• **SUNG, Min Ji**
  **Daejeon 34124 (KR)**
• **CHA, Ye Rhee**
  **Daejeon 34124 (KR)**
• **SON, Sung Real**
  **Daejeon 34124 (KR)**
• **KIM, Ji Min**
  **Daejeon 34124 (KR)**
• **SEO, Young Bin**
  **Daejeon 34124 (KR)**
• **HA, Hyeon Bae**
  **Daejeon 34124 (KR)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **FLUIDIZED BED REACTOR AND METHOD FOR RECYCLING LITHIUM PRECURSOR USING SAME**

(57)    A method for recycling a lithium precursor of the present application comprises preparing a cathode active material powder including lithium composite oxide particles and having different particle sizes. A preliminary precursor mixture is prepared by reducing the cathode active material powder in a fluidized bed reactor including a reactor body which gradually or stepwise tapers in diameter from the top to the bottom. Subsequently, a lithium precursor is recovered from the preliminary precursor mixture.

[FIG. 1]

```
┌─────────────────────────────────────────┐
│   PREPARE CATHODE ACTIVE MATERIAL        │────  S10
│ POWDERS HAVING DIFFERENT PARTICLE SIZES  │
└─────────────────────────────────────────┘
                    ↓
┌─────────────────────────────────────────┐
│    PREPARE PRELIMINARY PRECURSOR BY      │
│   REDUCING CATHODE ACTIVE MATERIAL       │────  S20
│ POWDERS IN FLUIDIZED BED REACTOR WHICH   │
│          A DIAMETER CHANGES              │
└─────────────────────────────────────────┘
                    ↓
┌─────────────────────────────────────────┐
│   PREPARE LITHIUM PRECURSOR FROM         │────  S30
│       PRELIMINARY PRECURSOR              │
└─────────────────────────────────────────┘
```

**Description**

[Technical Field]

The present invention relates to a fluidized bed reactor and a method for recycling a lithium precursor using the same. More specifically, the present invention relates to a fluidized bed reactor and a method for recycling a lithium precursor from a waste lithium-containing compound using the same.

[Background Art]

A secondary battery is a battery that may be repeatedly charged and discharged, and is widely applied to portable electronic communication devices such as camcorders, mobile phones, and laptop computers with the development of information communication and display industries. Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight. In this regard, the lithium secondary battery has been actively developed and applied as a power source.

The lithium secondary battery may include: an electrode assembly including a cathode, an anode, and a separation membrane (separator); and an electrolyte in which the electrode assembly is impregnated. In addition, the lithium secondary battery may further include, for example, a pouch-shaped outer case in which the electrode assembly and the electrolyte are housed.

A lithium metal oxide may be used as a cathode active material for the lithium secondary battery. The lithium metal oxide may further contain transition metals such as nickel, cobalt, or manganese.

The lithium composite oxide as the cathode active material may be prepared by reacting a lithium precursor with a nickel-cobalt-manganese (NCM) precursor containing nickel, cobalt and manganese.

As the above-described expensive valuable metals are used for the cathode active material, 20% or more of manufacturing costs of the lithium secondary battery is required to manufacture the cathode material. Recently, as the environmental protection issue is emerging, research on a method for recovering a cathode active material is being conducted. In order to recycle the cathode active material, it is necessary to recycle the lithium precursor from a waste cathode with high efficiency and high purity.

[Detailed Description of the Invention]

[Technical Objective]

An object of the present invention is to provide a fluidized bed reactor for recovering a high purity lithium precursor with high yield from a lithium-containing compound and a method for recycling a lithium precursor using the same.

[Technical Means]

A method for recycling a lithium precursor includes preparing a plurality of cathode active material powders including lithium composite oxide particles and having different particle sizes, preparing a preliminary precursor mixture by reducing the cathode active material powders in a fluidized bed reactor comprising a reactor body whose diameter is decreased stepwise or gradually from an upper portion to a lower portion, and recovering a lithium precursor from the preliminary precursor mixture.

In example embodiments, the cathode active material powders may include a first active material powder, a second active material powder, and a third active material powder, which have different particle sizes, and the reactor body may include a first region where the first active material powder is fluidized, a second region where the second active material powder is fluidized, and a third region where the third active material powder is fluidized.

In example embodiments, the first region, the second region, and the third region may be sequentially disposed from the upper portion of the reactor body.

In example embodiments, a diameter of the first region may be greater than a diameter of the second region, and the diameter of the second region may be greater than a diameter of the third region.

In example embodiments, a ratio of the diameter of the first region to the diameter of the third region may be 4 to 16.

In example embodiments, a ratio of the diameter of the second region to the diameter of the third region may be 2 to 4.

In example embodiments, the particle size of the first active material powder may be smaller than that of the second active material powder, and the particle size of the second active material powder may be smaller than that of the third active material powder.

In example embodiments, the particle size of the first active material powder may be less than 10 $\mu$m, the particle size of the second active material powder may be 10 to 100 $\mu$m, and the particle size of the third active material powder may be 100 $\mu$m or more.

In example embodiments, the step of preparing the preliminary precursor mixture may further include injecting a reducing gas into the fluidized bed reactor.

In example embodiments, a minimum flow rate of the reducing gas in the first region may be a terminal velocity or less of the first active material powder.

In example embodiments, a maximum flow rate of the reducing gas in the second region may be a minimum fluidization rate or more of the second active material powder, and a maximum flow rate of the reducing gas in the third region may be a minimum fluidization rate or more of the third active material powder.

In example embodiments, the reducing gas may be injected into the fluidized bed reactor at a flow rate of 8 to 18 cm/s.

In example embodiments, the fluidized bed reactor may include: a first connection section which connects the first region and the second region, and has a diameter decreasing from the first region to the second region; and a second connection section which connects the second region and the third region, and has a diameter decreasing from the second region to the third region.

In example embodiments, the first connection section and the second connection section may further include gas injection ports located in side surfaces thereof.

In example embodiments, the gas injection ports may be disposed on the side surface of the reactor body to be inclined upward.

In example embodiments, an angle formed by the side surfaces of the first connection section and the second connection section and the gas injection ports may be 45 to 90°.

According to another aspect of the present invention, there is provided a fluidized bed reactor for reducing a cathode active material including: a reactor body whose diameter is decreased stepwise or gradually from an upper portion to a lower portion; an active material inlet through which a plurality of cathode active material powders including lithium composite oxide particles and having different particle sizes are injected into the reactor body; and a gas inlet located at the lower portion of the reactor body and into which a reducing gas for fluidizing the active material powder is injected.

In example embodiments, the fluidized bed reactor for reducing a cathode active material of the present invention may include a first connection section which connects the first region and the second region, and has a diameter decreasing from the first region to the second region; and a second connection section which connects the second region and the third region, and has a diameter decreasing from the second region to the third region.

In example embodiments, the first connection section and the second connection section may further include gas injection ports located in side surfaces thereof.

[Effects of the Invention]

According to the above-described example embodiments, the method for recycling a lithium precursor of the present invention may reduce active material powders having different particle sizes in a fluidized bed reactor including a reactor body whose diameter is decreased stepwise or gradually from an upper portion to a lower portion. Accordingly, it is possible to more easily obtain a high purity lithium precursor with high yield.

In addition, as a diameter of the reactor changes, a temperature deviation according to the position in the reactor may be decreased. Accordingly, fluidization of the cathode active material particles may be smoothly performed to implement uniform mixing/reduction throughout the reactor.

In addition, the fluidized bed reactor may further include gas injection ports in side surfaces thereof. The gas injection ports may prevent the active material powder from being deposited on the side surfaces of the fluidized bed reactor. Accordingly, recovery efficiency of the lithium precursor may be further improved.

[Brief Description of Drawings]

FIG. 1 is a schematic flowchart for describing a method for recycling a lithium precursor according to example embodiments.

FIGS. 2 and 3 are schematic views illustrating a fluidized bed reactor for reducing a cathode active material according to example embodiments.

[Embodiments for Practicing the Invention]

Embodiments of the present invention recover a lithium precursor from a cathode active material by using a fluidized bed reactor including a reactor body whose diameter is decreased stepwise or gradually from an upper portion to a lower portion. Accordingly, recovery efficiency of the lithium precursor may be further improved.

Hereinafter, example embodiments of the present invention will be described in detail with reference to the accompanying drawings. However, these embodiments are merely an example, and the present invention is not limited to the specific embodiments described as the example.

As used herein, the term "precursor" is used to comprehensively refer to a compound including specific metals to provide the specific metals included in the cathode active material.

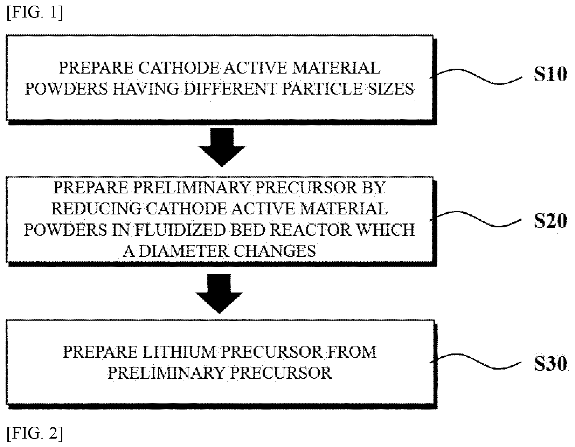

FIG. 1 is a schematic flowchart for describing a method for recycling a lithium precursor according to example embodiments.

According to example embodiments, cathode active material powders including lithium composite oxide particles and having different particle sizes may be prepared (e.g., step S10).

The cathode active material powder may include lithium composite oxide particles obtained or recycled from electric devices or chemical devices. The cathode active material powder may include various lithium composite oxide particles such as lithium oxide, lithium carbonate, lithium hydroxide and the like.

The cathode active material powder may include lithium composite oxide particles obtained or recycled from a waste lithium secondary battery. The waste lithium secondary battery may include an electrode assembly including a cathode, an anode, and a separation membrane interposed between the cathode and the anode. The cathode and anode may include a cathode active material layer and an anode active material layer, which are coated on a cathode current collector and an anode current collector, respectively.

For example, the cathode active material included in the cathode active material layer may include lithium composite oxide particles containing lithium and transition metals.

In some embodiments, the cathode active material may include lithium composite oxide particles represented by Formula 1 below.

$$[\text{Formula 1}] \qquad Li_xM1_aM2_bM3_cO_y$$

In Formula 1, M1, M2 and M3 may be a transition metal selected from Ni, Co, Mn, Na, Mg, Ca, Ti, V, Cr, Cu, Zn, Ge, Sr, Ag, Ba, Zr, Nb, Mo, Al, Ga or B. In Formula 1, $0<x\leq1.2$, $2\leq y\leq2.2$, $0<a<1$, $0<b<1$, $0<c<1$, $0<a+b+c\leq1$.

In some embodiments, the cathode active material may include NCM-based lithium composite oxide particles including nickel, cobalt and manganese. The NCM-based lithium composite oxide may be prepared by reacting a lithium precursor and a NCM precursor (e.g., NCM oxide) with each other through a co-precipitation reaction.

However, embodiments of the present invention may be commonly applied to a lithium composite oxide cathode material containing lithium, as well as the cathode material including the NCM-based lithium composite oxide particles.

For example, the cathode may be separated and recovered from the waste lithium secondary battery. The cathode includes the cathode current collector (e.g., aluminum (Al)) and the cathode active material layer as described above, and the cathode active material layer may include a conductive material and a binder together with the above-described cathode active material.

The conductive material may include, for example, a carbon-based material such as graphite, carbon black, graphene, carbon nanotube or the like.

The binder may include, for example, a resin material such as vinylidene fluoride-hexafluoropropylene copolymer (PVDF-co-HFP), polyvinylidene fluoride (PVDF), polyacrylonitrile, polymethyl methacrylate or the like.

In some example embodiments, the cathode active material powder may be prepared by separating a cathode from the waste lithium secondary lithium battery and pulverizing the separated cathode.

For example, the pulverization may be performed using a hammer mill, a shredder, a cut crusher, an impact crusher or the like. In this case, the cathode active material powder may be prepared in a powder form by the pulverization, and the cathode active material powder may include particles having different particle sizes.

For example, the cathode active material powder may have a multimodal particle size distribution. For example, the multimodal particle size distribution may refer to a case in which there are a plurality of main peaks in a particle size distribution chart of particles. In this case, the particle size of the cathode active material powder may be about 1 to 100 $\mu$m.

For example, the cathode active material powder may include a first active material powder, a second active material powder, and a third active material powder, which have different particle sizes. For example, the particle size of the first active material powder may be smaller than that of the second active material powder, and the particle size of the second active material powder may be smaller than that of the third active material powder.

For example, particles having a particle size of less than about 10 $\mu$m included in the cathode active material powder may be defined as the first active material powder, particles having a particle size of about 10 to 100 $\mu$m may be defined as the second active material powder, and particles having a particle size of about 100 $\mu$m or more may be defined as the third active material powder.

In some embodiments, the recovered cathode may be subjected to heat treatment before the pulverization. Accordingly, desorption of the cathode current collector may be facilitated during the pulverization treatment, and the binder and the conductive material may be at least partially removed. The heat treatment temperature may be, for example, about 100 °C to 500 °C, and preferably about 350 °C to 450 °C.

For example, the cathode current collector may be removed by immersing the separated cathode in an organic solvent. The cathode current collector may be removed from the separated cathode through centrifugation, and the cathode active material mixture may be selectively extracted by removing the cathode current collector.

Through the above-described processes, it is possible to obtain the cathode active material mixture in which a cathode current collector component such as aluminum is substantially completely separated and removed, and contents of carbon-based components derived from the carbon-based conductive material and the binder are removed or reduced.

According to example embodiments, a preliminary precursor mixture may be prepared from the cathode active material powder (e.g., step S20).

In some embodiments, a preliminary precursor mixture may be prepared by hydrogen reducing the cathode active material powder. For example, the hydrogen reduction treatment may be performed in a fluidized bed reactor including a reactor body whose diameter is decreased stepwise or gradually from an upper portion to a lower portion. For example, the cathode active material powder may be input into the fluidized bed reactor, and a reducing gas may be injected from the lower portion of the fluidized bed reactor. For example, the reducing gas may be a hydrogen gas. The structure of the fluidized bed reactor and reactions in the fluidized bed reactor will be described below.

A cyclone may be formed from the lower portion of the fluidized bed reactor by the reducing gas, and a preliminary precursor mixture may be generated while contacting it with the active material powder.

For example, a carrier gas together with the reducing gas may be mixed and injected into the lower portion of the fluidized bed reactor. Accordingly, the fluidized bed may enhance gas-solid mixing to facilitate a reaction, and a reaction layer of the preliminary precursor mixture may be easily formed in the fluidized bed reactor. The carrier gas may include, for example, an inert gas such as nitrogen (N2) or argon (Ar).

The preliminary precursor mixture may include a hydrogen reduction reactant of lithium-transition metal oxide included in the active material powder. When a NCM-based lithium oxide is used as the lithium-transition metal oxide, the preliminary precursor mixture may include a preliminary lithium precursor and a transition metal-containing reactant.

The preliminary lithium precursor may include lithium hydroxide, lithium oxide and/or lithium carbonate. According to example embodiments, since the preliminary lithium precursor is obtained through a hydrogen reduction reaction, the mixed content of lithium carbonate may be reduced.

The transition metal-containing reactant may include Ni, Co, NiO, CoO, MnO and the like.

The hydrogen reduction reaction may be performed at about 400 °C to 700 °C, and preferably 450 °C to 550 °C.

According to example embodiments, after collecting the preliminary precursor mixture, water washing treatment may be performed (e.g., step S30).

By the water washing treatment, the preliminary lithium precursor may be converted into a lithium precursor substantially composed of lithium hydroxide. For example, lithium oxide and lithium carbonate incorporated into the preliminary lithium precursor may be converted into lithium hydroxide by reacting with water or may be removed by washing with water. Therefore, a high purity lithium precursor converted into a desired form of lithium hydroxide may be produced.

The preliminary lithium precursor may be dissolved by reacting with water to substantially prepare an aqueous solution of lithium hydroxide.

The transition metal-containing reactant included in the preliminary precursor mixture may be precipitated without dissolving in or reacting with water by the water washing treatment. Therefore, the transition metal-containing reactant may be separated by filtration to obtain a lithium precursor including a high purity lithium hydroxide.

In some embodiments, the water washing treatment may be performed under conditions in which carbon dioxide ($CO_2$) is excluded. For example, since the water washing treatment is performed in a $CO_2$-free atmosphere (e.g., an air atmosphere from which $CO_2$ is removed), regeneration of lithium carbonate may be prevented.

In one embodiment, $CO_2$-free atmosphere may be created by purging (e.g., nitrogen purging) water provided during the water washing treatment using a $CO_2$ deficient gas.

In some embodiments, the precipitated, separated transition metal-containing reactant may be treated with an acid solution to form precursors in the form of acid salts of each transition metal. In one embodiment, sulfuric acid may be used as the acid solution. In this case, $NiSO_4$, $MnSO_4$ and $CoSO_4$ may be recovered as the transition metal precursor, respectively.

As described above, the preliminary precursor mixture produced by hydrogen reduction may be treated with water to obtain a lithium precursor substantially composed of lithium hydroxide. Therefore, it is possible to obtain a cathode active material having a higher capacity and a longer life-span by preventing by-product generation of other types of lithium precursors such as lithium carbonate.

The lithium precursor may include lithium hydroxide (LiOH), lithium oxide ($Li_2O$), or lithium carbonate ($Li_2CO_3$). In terms of charge/discharge characteristics, life-span characteristics, and high-temperature stability of the lithium secondary battery, the lithium hydroxide may be advantageous as the lithium precursor. For example, the lithium carbonate may cause a deposition reaction on the separation membrane, thereby deteriorating the life-span stability.

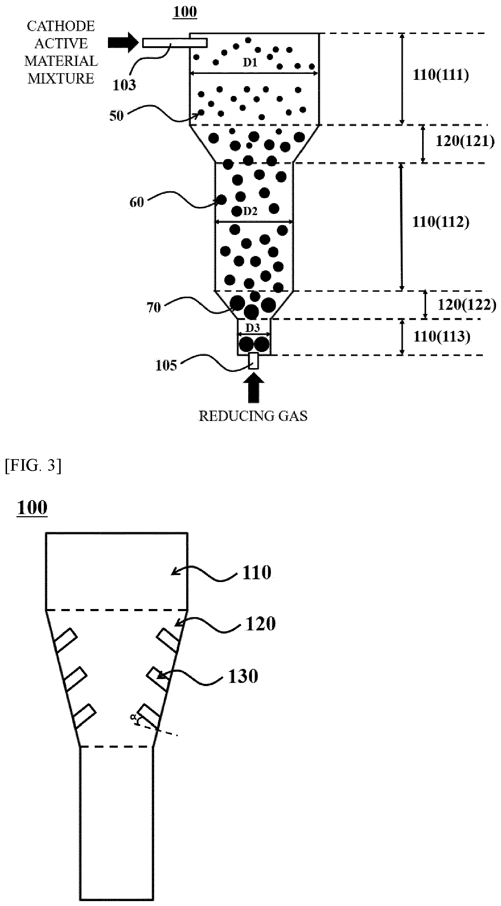

FIGS. 2 and 3 are schematic views illustrating a fluidized bed reactor for reducing a cathode active material according to example embodiments.

Referring to FIG. 2, a fluidized bed reactor 100 for reducing a cathode active material of the present invention may include: a reactor body 110 whose diameter is decreased stepwise or gradually from an upper portion to a lower portion; an active material inlet 103 through which a plurality of active material powders 50, 60 and 70 including lithium composite oxide particles and having different particle sizes are injected into the reactor body 110; and a gas inlet 105 located at the lower portion of the reactor body 110 and into which a reducing gas for fluidizing the active material powders 50, 60 and 70 is injected.

According to some example embodiments, the cathode active material powders 50, 60 and 70 may include a first active material powder 50, a second active material powder 60, and a third active material powder 70, which have different particle sizes.

For example, within the reactor body 110, the plurality of active material powders 50, 60 and 70 may be fluidized, respectively. For example, the reactor body 110 may include a plurality of regions having different diameters in which the plurality of active material powders 50, 60 and 70 are fluidized, respectively.

For example, the third active material powder 70 having a large particle size may be fluidized in the lower portion of the reactor body 110, and the first active material powder 50 having a small particle size may be fluidized in the upper portion of the reactor body 110.

According to some embodiments, the reactor body 110 may include: a first region 111 where the first active material powder 50 is fluidized; a second region 112 where the second active material powder 60 is fluidized; and a third region 113 where the third active material powder 70 is fluidized.

Accordingly, during fluidizing the cathode active material mixture including a plurality of active material powders having different particle sizes, it is possible to effectively prevent problems in which active material powders having small particle sizes are scattered and leaked, or active material powders having large particle sizes are not sufficiently fluidized.

In addition, as the reactor has regions with different diameters, the temperature deviation according to the position in the reactor may be decreased. Accordingly, fluidization of the cathode active material particles may be smoothly performed to implement uniform mixing throughout the reactor. Thereby, excellent reaction efficiency may be implemented even for particle mixtures having different particle size distributions.

For example, a diameter D1 the first region 111 may be greater than a diameter D2 of the second region 112, and the diameter D2 of the second region 112 may be greater than a diameter D3 of the third region 113.

In this case, the particle size of the first active material powder 50 fluidized in the first region 111 may be smaller than that of the second active material powder 60 fluidized in the second region 112, and the particle size of the second active material powder 60 fluidized in the second region 112 may be larger than that of the third active material powder 70 fluidized in the third region 113.

For example, a flow rate of the reducing gas injected into the fluidized bed reactor may be inversely proportional to the square of the diameter of each region. Therefore, the flow rate of the reducing gas may be slower in the first region 111 than in the second region 112, and may be slower in the second region 112 than in the third region 113. Accordingly, in the first region 111, the first active material powder 50 having a small particle size may be easily fluidized, and in the third region 113, the third active material powder 70 having a large particle size may be easily fluidized.

According to some example embodiments, a ratio of the diameter D1 of the first region 111 to the diameter D3 of the third region 113 may be 5 to 10. For example, a ratio of the diameter D2 of the second region 112 to the diameter D3 of the third region 113 may be 2 to 4.

For example, when satisfying the above diameter ratio range, fluidization of each of the first active material powder 50, the second active material powder 60, and the third active material powder 70 may be more easily performed. Accordingly, recovery efficiency of the lithium precursor may be further improved.

According to some example embodiments, the first region 111, the second region 112, and the third region 113 may be sequentially disposed from the upper portion of the reactor body 110. In this case, the reducing gas may be injected from the lower portion to the upper portion of the reactor body 110. Thereby, the diameter of each region may be decreased from the upper portion toward the lower portion of the reactor body 110.

For example, as the diameter of the reactor body 110 is decreased from the upper portion toward the lower portion, the flow rate of the reducing gas injected into the lower portion of the reactor body 110 may be decreased from the lower portion toward the upper portion. Accordingly, the first active material powder 50 having a small particle size may be fluidized in the first region 111 having a large diameter, and the third active material powder 70 having a large particle size may be fluidized in the third region 113 having a small diameter.

Thereby, during fluidizing the cathode active material mixture, it is possible to effectively prevent problems in which the recovery efficiency of the lithium precursor is reduced due to scattering of the active material powder having a small particle size or failure to fluidize the active material powder having a large particle size.

For example, the gas inlet 105 is located at the lower portion of the reactor body 110, and the reducing gas may be injected through this inlet. The reducing gas may include, for example, the hydrogen gas. For example, the reducing gas may be injected into the lower portion of the reactor body 110 to fluidize and reduce the cathode active material mixture included inside the reactor body 110.

For example, a minimum fluidization rate to be described below may refer to the minimum flow rate of the reducing gas for fluidizing the cathode active material powders 50, 60 and 70. For example, the minimum fluidization rate may be calculated through Equation 1 below.

[Equation 1]

$$\frac{1.75}{\varepsilon_{mf}{}^3 \varphi_s}\left(\frac{d_p u_{mf} \rho_g}{\mu}\right)^2 + \frac{150(1-\varepsilon_{mf})}{\varepsilon_{mf}{}^3 \varphi_s{}^2}\left(\frac{d_p u_{mf} \rho_g}{\mu}\right) = \frac{d_p{}^3 \rho_g (\rho_s - \rho_g) g}{\mu^2}$$

In Equation 1, $u_{mf}$ may be the minimum fluidization rate, $\varepsilon_{mf}$ may be a volume fraction of the active material powder particles, $d_p$ may be a size of the active material powder particles, $\rho_g$ may be a gas density of the reducing gas, $\rho_s$ may be a solid density of the active material powder particles, $\mu$ may be a gas viscosity of the reducing gas, $\varphi_s$ may be a sphericity of the active material powder particles, and g may be an acceleration of gravity.

For example, the flow rate of the reducing gas within the fluidized bed reactor 100 may vary depending on the diameter of the reactor body 110 included in the fluidized bed reactor 100. For example, the flow rate of the reducing gas may be decreased as the diameter of the reactor body 110 is increased.

In some example embodiments, the minimum flow rate of the reducing gas in the first region 111 may be a terminal velocity or less of the first active material powder 50. For example, the terminal velocity may refer to a velocity in a state where an object moves at a constant speed when descending or moving in a fluid.

For example, the terminal velocity may be calculated through Equation 2 below.

[Equation 2]

$$u_t = \left[\frac{18}{d_p{}^2} + \frac{2.335 - 1.744 \varphi_s}{d_p{}^{0.5}}\right]^{-1}$$

In Equation 2, $u_t$ may be the terminal velocity, $d_p$ may be the size of the active material powder particles, and $\varphi_s$ may be the sphericity of the active material powder particles.

When the minimum flow rate of the reducing gas in the first region 111 is reduced to the terminal velocity or less of the first active material powder 50, it is possible to effectively prevent the problem in which the first active material powder 50 having a relatively small particle size is scattered. In addition, as the first active material powder 50 no longer rises to the upper portion of the fluidized bed reactor 100 and descends, the content of the first active material powder 50 to be fluidized may be more increased. Accordingly, the recovery efficiency of the lithium precursor may be further improved.

In some example embodiments, a maximum flow rate of the reducing gas in the second region 112 may be the minimum fluidization rate or more of the second active material powder 60, and a maximum flow rate of the reducing gas in the third region 113 may be the minimum fluidization rate or more of the third active material powder 70.

In this case, the second active material powder 60 and the third active material powder 70 having a large particle size may be more effectively fluidized. Accordingly, it is possible to effectively prevent a problem in which the cathode active material powder is not fluidized and deposited on the lower portion of the fluidized bed reactor 100.

In some example embodiments, the reducing gas may be injected into the fluidized bed reactor 100 at a flow rate of 8 cm/s to 18 cm/s or more.

For example, when satisfying the above flow rate range, scattering of the first active material powder having a small particle size may be prevented, and the third active material powder having a large particle size may be effectively fluidized by the first region having a large diameter located in the upper portion of the fluidized bed reactor. Thereby, the recovery efficiency of the lithium precursor may be improved.

According to some example embodiments, the fluidized bed reactor 100 for reducing a cathode active material of the present invention may include: a first connection section 121 which connects the first region 111 and the second region 112, and has a diameter decreasing from the first region 111 toward the second region 112; and a second connection section 122 which connects the second region 112 and the third region 113, and has a diameter decreasing from the second region 112 toward the third region 113.

In this case, the first connection section 121 and the second connection section 122 prevent the diameter of the reactor body 110 from rapidly changing, thereby preventing the flow rate of the reducing gas within the reactor body 110 from being rapidly decreased. Accordingly, a problem in which the active material powder is deposited on a side surface of the reactor body 110 according to a decrease in the flow rate of the reducing gas may be effectively prevented.

**Referring** to FIG. 3, the fluidized bed reactor for reducing a cathode active material of the present invention may further include gas injection ports 130 disposed on a side surface of the connection section 120. For example, the reducing gas, or the like may be injected through the gas injection ports 130. In this case, the gas injected from the gas injection ports 130 may effectively prevent the active material powder from being deposited on the side surface of the connection section 120.

According to some example embodiments, the gas injection ports 130 may be disposed on the side surface of the reactor body 110 to be inclined upward. In this case, due to the gas injection ports 130 disposed upward of the reactor body 110, the problem in which the cathode active material powders 50, 60 and 70 are deposited on the side surface of the connection section 120 may be more effectively prevented.

According to some example embodiments, an angle $\alpha$ formed by the side surface of the connection section 120 and the gas injection port 130 may be 45° to 90°. When the angle $\alpha$ formed by the side surface of the connection section 120 and the gas injection port 130 satisfies the above range, it is possible to more effectively prevent the problem in which the active material powder is deposited on the side surface of the connection section 120.

**Claims**

1. A method for recycling a lithium precursor comprising:

    preparing a plurality of cathode active material powders including lithium composite oxide particles and having different particle sizes;
    preparing a preliminary precursor mixture by reducing the cathode active material powders in a fluidized bed reactor comprising a reactor body whose diameter is decreased stepwise or gradually from an upper portion to a lower portion; and
    recovering a lithium precursor from the preliminary precursor mixture.

2. The method for recycling a lithium precursor according to claim 1, wherein the cathode active material powders comprise a first active material powder, a second active material powder, and a third active material powder, which have different particle sizes, and
    the reactor body comprises a first region where the first active material powder is fluidized, a second region where the second active material powder is fluidized, and a third region where the third active material powder is fluidized.

3. The method for recycling a lithium precursor according to claim 2, wherein the first region, the second region, and the third region are sequentially disposed from the upper portion of the reactor body.

4. The method for recycling a lithium precursor according to claim 3, wherein a diameter of the first region is greater than a diameter of the second region, and the diameter of the second region is greater than a diameter of the third region.

5. The method for recycling a lithium precursor according to claim 4, wherein a ratio of the diameter of the first region to the diameter of the third region is 4 to 16.

6. The method for recycling a lithium precursor according to claim 4, wherein a ratio of the diameter of the second region to the diameter of the third region is 2 to 4.

7. The method for recycling a lithium precursor according to claim 3, wherein a particle size of the first active material powder is smaller than a particle size of the second active material powder, and the particle size of the second active material powder is smaller than a particle size of the third active material powder.

8. The method for recycling a lithium precursor according to claim 7, wherein the particle size of the first active material powder is less than 10 $\mu$m, the particle size of the second active material powder is 10 $\mu$m to 100 $\mu$m, and the particle size of the third active material powder is 100 $\mu$m or more.

9. The method for recycling a lithium precursor according to claim 2, wherein the preparing the preliminary precursor mixture further comprises injecting a reducing gas into the fluidized bed reactor.

10. The method for recycling a lithium precursor according to claim 9, wherein a minimum flow rate of the reducing gas in the first region is a terminal velocity or less of the first active material powder.

11. The method for recycling a lithium precursor according to claim 9, wherein a maximum flow rate of the reducing gas in the second region is a minimum fluidization rate or more of the second active material powder, and a maximum flow rate of the reducing gas in the third region is a minimum fluidization rate or more of the third active material powder.

12. The method for recycling a lithium precursor according to claim 9, wherein the reducing gas is injected into the fluidized bed reactor at a flow rate of 8 cm/s to 18 cm/s.

13. The method for recycling a lithium precursor according to claim 2, wherein the fluidized bed reactor comprises:

a first connection section which connects the first region and the second region, and has a diameter decreasing from the first region to the second region; and
a second connection section which connects the second region and the third region, and has a diameter decreasing from the second region to the third region.

14. The method for recycling a lithium precursor according to claim 13, wherein the first connection section and the second connection section further comprise gas injection ports located in side surfaces thereof.

15. The method for recycling a lithium precursor according to claim 14, wherein the gas injection ports are disposed on the side surface of the reactor body to be inclined upward.

16. A fluidized bed reactor for reducing a cathode active material according to claim 14, wherein an angle formed by the side surfaces of the first connection section and the second connection section and the gas injection ports is 45° to 90°.

17. A fluidized bed reactor for reducing a cathode active material comprising:

a reactor body whose diameter is decreased stepwise or gradually from an upper portion to a lower portion;
an active material inlet through which a plurality of cathode active material powders including lithium composite oxide particles and having different particle sizes are injected into the reactor body; and
a gas inlet located at the lower portion of the reactor body and into which a reducing gas for fluidizing the active material powder is injected.

18. The fluidized bed reactor for reducing a cathode active material according to claim 17,

wherein the cathode active material powder includes a first active material powder, a second active material powder, and a third active material powder, which have different particle sizes,
the reactor body comprises a first region where the first active material powder is fluidized, a second region where the second active material powder is fluidized, and a third region where the third active material powder is fluidized;
a first connection section which connects the first region and the second region, and has a diameter decreasing from the first region to the second region; and
a second connection section which connects the second region and the third region, and has a diameter decreasing from the second region to the third region.

19. The fluidized bed reactor for reducing a cathode active material according to claim 18, wherein the first connection section and the second connection section further comprise gas injection ports located in side surfaces thereof.

[FIG. 1]

| PREPARE CATHODE ACTIVE MATERIAL POWDERS HAVING DIFFERENT PARTICLE SIZES | S10 |

↓

| PREPARE PRELIMINARY PRECURSOR BY REDUCING CATHODE ACTIVE MATERIAL POWDERS IN FLUIDIZED BED REACTOR WHICH A DIAMETER CHANGES | S20 |

↓

| PREPARE LITHIUM PRECURSOR FROM PRELIMINARY PRECURSOR | S30 |

[FIG. 2]

**100**

CATHODE
ACTIVE
MATERIAL
MIXTURE

103

50

60

70

105

REDUCING GAS

D1

D2

D3

110(111)

120(121)

110(112)

120(122)

110(113)

[FIG. 3]

**100**

110

120

130

## INTERNATIONAL SEARCH REPORT

| International application No. |
|---|
| **PCT/KR2022/003358** |

**A.    CLASSIFICATION OF SUBJECT MATTER**

**C01G 53/00**(2006.01)i; **B01J 8/24**(2006.01)i

According to International Patent Classification (IPC) or to both national classification and IPC

**B.    FIELDS SEARCHED**

Minimum documentation searched (classification system followed by classification symbols)

C01G 53/00(2006.01); B09B 3/00(2006.01); C01D 15/02(2006.01); C01F 7/02(2006.01); C01G 3/10(2006.01); H01M 10/052(2010.01); H01M 10/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 전구체 재생(lithium precursor regeneration), 유동층 반응기(fluidized bed reactor), 환원성 가스(reducing gas), 양극 활물질 파우더(cathode active material powder), 직경 감소(reduced diameter)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2020238 B1 (SK INNOVATION CO., LTD.) 10 September 2019 (2019-09-10)<br>See paragraphs [0041], [0043], [0047], [0048] and [0050]; claim 1; and figure 1. | 1,17 |
| A | | 2-16,18,19 |
| A | KR 10-2020-0052735 A (SK INNOVATION CO., LTD.) 15 May 2020 (2020-05-15)<br>See entire document. | 1-19 |
| A | WO 2016-129732 A1 (E&D CO., LTD.) 18 August 2016 (2016-08-18)<br>See entire document. | 1-19 |
| A | WO 2017-091562 A1 (WORCESTER POLYTECHNIC INSTITUTE) 01 June 2017 (2017-06-01)<br>See entire document. | 1-19 |
| A | CN 101555030 A (FOSHAN BRUNP N&C TECHNOLOGY CO., LTD.) 14 October 2009 (2009-10-14)<br>See entire document. | 1-19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2022** | **13 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/003358**

| Patent document cited in search report | | | Publication date (day/month/year) | Patent family member(s) | | | Publication date (day/month/year) |
|---|---|---|---|---|---|---|---|
| KR | 10-2020238 | B1 | 10 September 2019 | JP | 2021-521581 | A | 26 August 2021 |
| | | | | US | 2021-0115532 | A1 | 22 April 2021 |
| KR | 10-2020-0052735 | A | 15 May 2020 | US | 2021-0273274 | A1 | 02 September 2021 |
| WO | 2016-129732 | A1 | 18 August 2016 | | None | | |
| WO | 2017-091562 | A1 | 01 June 2017 | KR | 10-2018-0080992 | A | 13 July 2018 |
| | | | | US | 10522884 | B2 | 31 December 2019 |
| | | | | US | 10741890 | B2 | 11 August 2020 |
| | | | | US | 2013-0302226 | A1 | 14 November 2013 |
| | | | | US | 2017-0077564 | A1 | 16 March 2017 |
| | | | | US | 2018-0261894 | A1 | 13 September 2018 |
| | | | | US | 2019-0123402 | A1 | 25 April 2019 |
| | | | | US | 9834827 | B2 | 05 December 2017 |
| CN | 101555030 | A | 14 October 2009 | | None | | |

Form PCT/ISA/210 (patent family annex) (July 2019)